# EUROPEAN PATENT APPLICATION

(11) **EP 2 070 682 A1**
(43) Date of publication of application: **17.06.2009**
(21) Application number: 07254857.1
(22) Date of filing: 13.12.2007
(51) Int. Cl.: B29C 47/02, B05C 3/00

(54) **Process for the production of a cylindrical article**

(71) Applicant: Philip Morris Products S.A., 2000 Neuchâtel (CH)
(72) Inventor: The designation of the inventor has not yet been filed
(74) Representative: Millburn, Julie Elizabeth

(57) **Abstract**

A process for the production of a cylindrical article (4) having a longitudinal channel extending therethrough, the inner surface of which is covered with a coating layer (22), comprises the steps of: (a) forming the cylindrical article (4) by extrusion through a die (6) comprising an orifice (8) with a mandrel (10) mounted therein to form the longitudinal channel; and (b) applying a fluid coating compound (16) to the inner surface of the longitudinal channel downstream of the mandrel. The coating compound (16) is fed through a feed passageway (12) extending longitudinally through the mandrel (10) and having an outlet in the end thereof. The coating compound (16) wets the inner surface of the longitudinal channel as a result of forces of adhesion between the coating compound and the inner surface, thereby forming the coating layer (22) as the cylindrical article (4) is extruded.

## Description

The present invention relates to a process for the production of a cylindrical article having at least one longitudinal channel extending through it, the surface of which is coated. The process finds particular application in the production of ceramic heat sources for heated smoking articles, such as heated cigarettes.

Extrusion is a well known manufacturing process used in many industries, including the food, metal, plastic and ceramic industries, for the production of elongate rods and tubes with a fixed cross section. In an extrusion process, a plastic feedstock is pushed or drawn through a die having the inverse geometry to the desired shape of the extruded article. For example, solid rods are produced by extruding the feedstock through a die orifice. One or more hollow passageways may be created in an extruded rod by mounting one or more pins, or mandrels, in the die orifice.

It is also known to use an extrusion process to apply a coating layer to a substrate. For example, EP-A-0 914 239 discloses a die for simultaneously extruding one or more fluid streams onto a moving web to form a coating layer thereon.

A coating layer may be directly applied to the surface of an extruded article in the process of co-extrusion, in which two or more different materials are extruded through different orifices in the same die. The orifices are arranged so that the extruded materials merge and weld together into a laminar structure as they leave the die. For example, EP-A-0 662 385 and EP-A-0 491 093 both disclose co-extrusion processes for the production of a tube having two or more concentric layers. However, co-extrusion has been found to be unsuitable for applying a coating layer having a thickness of less than about 1 mm, because problems are encountered when the die orifice through which the coating is extruded becomes too narrow. Typically, high viscosity feedstocks are used in extrusion in order to obtain mechanical stability so that the extruded articles do not deform under gravity during the extrusion or during subsequent handling. However, forcing a high viscosity feedstock through a narrow orifice creates large shear forces inside the orifice. High pressures are therefore required to force the feedstock through the die and to prevent blockages of the die orifice. Furthermore, abrasion of the die is high, which will significantly reduce the lifetime of the die. This is a particular problem if the feedstock contains hard, abrasive particles such as ceramic particles.

A number of alternative methods for applying a coating layer to one or more surfaces of an extruded rod or tube have been proposed in the art. The application of a coating layer to the outer surfaces of an extruded article may be carried out using relatively simple conventional coating techniques such as spraying and dipping. However, the application of a coating layer to the interior surfaces of an extruded tube is more difficult.

DE-A-35 25 530 and DE-A-102 49 141 both describe extrusion processes in which a coating is applied to the inner surfaces of an extruded tube. In the process of DE-A-35 25 530 a cylindrical layer of the coating material is formed, then applied directly to the inner surface of an extruded tube and mechanically pressed against that surface by means of a mandrel. In the process of DE-A-102 49 141, the coating material is injected onto the inner surface of the tube through one or more feed channels in a mandrel mounted within the die orifice. The coating material is then mechanically pressed against the inner surface by the end of the mandrel, which is of an increased diameter compared to the rest of the mandrel. In the processes described in DE-A-35 25 530 and DE-A-102 49 141, it is possible to apply coating compounds having a lower viscosity than those required in co-extrusion. However, as with co-extrusion, the dimensions of the die, and in particular the die orifice and the flow channels in the mandrel, are determined by the dimensions of the extruded article and the thickness of coating that is desired. The smaller the die orifice and flow channels required, the harder it becomes to manufacture and operate the die and the more likely it is that abrasion and blockage will occur during extrusion.

Heated smoking articles, such as heated cigarettes, typically incorporate a combustible fuel element, or heat source. An aerosol is generated by the transfer of heat from the heat source to a physically separate aerosol forming material, which may be located within, around, or downstream of the heat source. The heat source may be formed by extrusion and advantageously comprises at least one longitudinal air flow channel extending along the entire length of the heat source. The at least one air flow channel provides a controlled amount of convective heating of the aerosol-generating substance. The inner surface of the air flow channels may be partially or entirely coated where it is desired to reduce the convective heat transfer. The coating may advantageously reduce or substantially prevent the inflow of combustion by-products from the combustible heat source into the airflow channel or channels. The coating may also advantageously reduce or prevent the activation of combustion of the heat source during puffing.

US-A-5 040 551 describes a process for the production of a carbonaceous fuel element for a heated smoking article. The fuel element has one or more longitudinally extending passageways, the surfaces of which are coated with a microporous layer of solid particulate material. The coating is applied to the surfaces of the passageways of a pre-formed heat element by spraying, dipping or by flowing a suspension of the coating through the heat element. The coating is then dried in order to remove the solvent from the suspension.

It would be desirable to provide a simplified and more efficient process for the production of a cylindrical article having one or more longitudinal channels extending through it, in which a uniform coating may be applied to the surfaces of some or all of the longitudinal channels.

It would also be desirable to provide an effective process for applying a thin coating to the longitudinal channels of a cylindrical article while minimising, or substantially eliminating the problems encountered in the prior art processes discussed above.

In particular, it would be desirable to provide an efficient and consistent process for the manufacture of cylindrical heat sources for heated smoking articles.

According to the present invention there is provided a process for the production of a cylindrical article having a longitudinal channel extending therethrough, the inner surface of which is covered with a coating layer, wherein the process comprises the steps of:
(a) forming the cylindrical article by extrusion through a die comprising an orifice with a mandrel mounted therein to form the longitudinal channel;
(b) applying a fluid coating compound to the inner surface of the longitudinal channel downstream of the mandrel by feeding the coating compound through a feed passageway extending longitudinally through the mandrel and having an outlet in the end thereof, wherein the coating compound wets the inner surface of the longitudinal channel as a result of forces of adhesion between the coating compound and the inner surface, thereby forming the coating layer as the cylindrical article is extruded.

The term "cylindrical" is used throughout the specification to describe an extruded article having a substantially constant cross section along its length and includes, for example, cylinders having a circular, elliptical or rectangular cross section.

In the process according to the present invention, the coating compound "wets" the inner surface of the longitudinal channel. This means that the coating compound spreads out over the surface of its own accord as a result of thermodynamic driving forces and in particular, as a result of the forces of adhesion between the coating compound and the inner surface of the longitudinal channel. The degree to which a fluid wets a solid surface is a thermodynamic variable that depends on the interfacial tensions of the solid-liquid interface and the liquid-gas interface.

It is possible to determine the degree to which a given liquid will wet a surface by conducting the well known "sessile drop" test, which measures the contact angle between the interface of a droplet and the horizontal surface on which the droplet is placed. The higher the degree of wetting of a surface by a liquid, the more the liquid spreads out on the surface and the lower the contact angle will be. The contact angle is typically measured with a goniometer, using cameras and software to capture and analyse the profile of the drop. The sessile drop test is described, for example, in the Encyclopedia of Surface and Colloid Science, Second Edition, 2006, p1528-9 (published by CRC Press).

In the process of the present invention, it is preferable to select a coating compound which wets a surface of the material forming the extruded article to a high degree.

As a result of the way in which the coating layer is formed, it is possible to provide a homogeneous layer of the coating compound on the surface simply by bringing the coating compound into contact with the surface during extrusion. The coating compound will then spread out over the surface of the longitudinal channel of its own accord as the cylindrical article is extruded. Advantageously, there is no need to apply mechanical contact pressure to press the coating compound against the inner surface of the longitudinal channel, as in the prior art processes described above.

The coating layer applied in the process of the present invention is substantially uniform in composition, structure and thickness over the entire inner surface of the longitudinal channel and the surface of the coating layer is substantially smooth. Furthermore, surface deformations at the inner surface of the longitudinal channel are smoothed by the coating. Weaknesses in the coating layer which would otherwise be caused as a result of such deformations are therefore substantially eliminated. These advantageous surface properties are a result of the coating layer being formed due to thermodynamic forces, rather than by the mechanical application of pressure. In contrast to the present invention, in the processes of the prior art in which the mandrel is used to mechanically press the coating layer against the surface of the extruded article, the coating layer will not be smooth, since the inevitable imperfections in the surface of the mandrel and the extruded article cause imperfections in the surface of the coating layer.

Using the process of the present invention it is possible to apply a coating to the inner surface of a longitudinal channel of an extruded cylindrical article during the extrusion process, using much simpler apparatus than required in the prior art processes. Preferably, the extrusion step and the coating step take place substantially simultaneously. The process of the present invention is therefore an efficient, single step process which takes a similar amount of time as a simple extrusion process.

Advantageously, the process of the present invention is suitable for use with a wide variety of materials for both the cylindrical article and the coating compound. The cylindrical article may be formed from any suitable "plastic" material, that is, a material that is capable of being moulded or extruded into a particular shape. For example, the plastic material that is extruded to form the cylindrical article, also known as the feedstock, may include one or more ceramics, metals, polymers, or combinations thereof, or one or more foodstuffs.

Preferably, the coating has a thickness of between 10 microns and 100 microns.

The thickness of a particular coating compound formed using the process of the present invention can readily be predicted by the skilled man through the application of known thermodynamic principles, as described in D. Quéré, Annu. Rev. Fluid Mech., vol. 31 (1999), pages 347-384. In the process of the present invention, the thickness of the coating layer can be altered by changing the viscosity of the coating compound, or the extrusion velocity, or both.

Unlike in the prior art processes described above, the thickness of the coating layer applied to the surface of the longitudinal channel is not affected by the diameter of the feed passageway in the mandrel, through which the coating compound is fed. Advantageously, therefore, it is possible to alter the thickness of the coating that is deposited by altering the process parameters such as viscosity and extrusion speed, rather than by altering the diameter of the feed passageway in the mandrel. A much simpler design of mandrel can therefore be employed than in the prior art processes. In addition, it is possible to obtain much thinner coatings than have been achieved previously.

Advantageously, since thin coatings can be obtained by the process of the present invention without reducing the diameter of the flow channel in the mandrel, the problems associated with the prior art processes, such as high shear stress and abrasion, are not encountered to such an extent in the process of the present invention.

The process of the present invention also has the advantage that, unlike in the prior art processes, it is possible to apply coating compounds containing hard particles, since the flow channel may have a sufficient diameter to prevent blockage and significant abrasion by the hard particles.

Preferably, the process further comprises the step of drying the extruded cylindrical article. The drying step may be conducted at ambient temperature, or may be assisted by the application of heat, pressure, or a combination of both. Typically, removal of solvent from both the extruded cylindrical article and the coating compound will be desired during a drying step.

Alternatively, or in addition to the drying step, it may be desired to process the extruded article in some way in order to achieve the final product. For example, it may be desired to subject the extruded article to thermal treatment in order to stabilise the coating, or to bring about the burnout or pyrolysis of organic additives that have been added to the coating compound to adjust its wetting or rheological properties.

The process may further incorporate a cutting step, in which the extruded cylindrical article is cut into individual portions. The cutting step may take place before, or after the drying step and any other additional processing steps.

Preferably, the flow of the coating compound through the feed passageway in the mandrel is controlled such that a reservoir of the coating compound is formed in the portion of the longitudinal channel immediately adjacent to the end of the mandrel. The flow of the coating compound may be controlled by a pump, which operates independently from the flow system for the feedstock. A reservoir of the coating compound, completely filling the portion of the longitudinal channel immediately adjacent the end of the mandrel, may be produced by pumping an increased volume of the compound into the mandrel during the initial stage of extrusion. Subsequently, the flow volume may be adjusted so that the coating compound in the reservoir is replaced at the same rate as it is removed inside the longitudinal channel of the cylindrical article. This means that throughout the extrusion process the meniscus of the reservoir advantageously remains in substantially the same position relative to the end of the mandrel. Movement of the meniscus backwards into the interior of the mandrel may disrupt the formation of the coating layer. Movement of the meniscus further away from the mandrel would result in longer sections of the longitudinal channel being filled than necessary.

In order to monitor and control the position of the reservoir, the position of its meniscus may be measured using a suitable non-destructive method such as X-ray absorption or beta-ray backscattering. Electromagnetic methods, such as capacitive sensors may also be employed for certain coating compounds. The presence or absence of the reservoir is detected at two or more positions along the flow channel of the coating compound. The flow rate of the compound is controlled accordingly by the pump to ensure that the meniscus remains in the desired position.

Alternatively, the flow of the coating compound through the feed passageway in the mandrel may be controlled so that a reservoir does not form in the longitudinal channel. In this case, the flow rate of the coating compound affects the thickness of the coating layer that is formed. During extrusion, negative hydrostatic pressure is built up at the end of the mandrel as a result of the relative motion of the extruded article and the coating compound. The hydrostatic pressure in the feed passageway may be monitored using one or more pressure sensors and the flow pressure may be adjusted in response to the pressure measurements to ensure that the pressure remains at the desired level.

At the outlet of the feed passageway in the end of the mandrel, the edge of the mandrel wall may advantageously be bevelled in order to avoid large tensile stresses and breakaway of the coating as it is pulled over the edge of the mandrel.

The process of the present invention may also be used to produce a cylindrical article having a plurality of longitudinal channels, by using a die in the extrusion step that has a plurality of mandrels mounted in the die orifice, each mandrel forming one of the longitudinal channels. The longitudinal channels may have the same or different diameters to each other.

Where a cylindrical article having a plurality of longitudinal channels is produced, the inner surface of one or more of the channels may be coated. Each channel may be coated in the manner described above, by feeding a coating compound through a flow passageway in the mandrel that is creating that channel. Preferably, the inner surface of all of the longitudinal channels is coated. The coating compound used to coat each longitudinal channel may be the same as, or different to, the coating compound used to coat the other longitudinal air flow channels.

The process of the present invention may be carried out with extrusion occurring in the horizontal or vertical direction. With horizontal extrusion, gravity may cause a downward draining of the coating compound after it has been formed on the inner surfaces of the longitudinal channel. A coating compound having a high viscosity and large yield strength is therefore preferred, in order to prevent this effect. However, during supply of the coating compound through the feed channel in the mandrel, it is preferred that the viscosity of the coating compound be as low as possible in order to avoid large stresses and abrasion in the flow channels. A coating showing thixotropic behaviour is therefore preferred. A thixotropic material is a relatively high viscosity material that undergoes a reduction in viscosity when shear force is applied and reverts to the original, higher viscosity when the shear force is removed again. Thixotropic properties may be obtained by the addition of a suitable additive to the coating compound. Suitable additives for this purpose are well known in the art. For example, anisotropic constituents such as elongated polymers, or platelet shaped particles, can be used.

Unlike in the prior art processes, the process of the present invention is suitable for applying a coating compound that contains hard, abrasive, particles, such as a suspension of ceramic particles. When suspensions are used, the drying step is usually desired in order to remove the liquid phase of the suspension. After drying, the suspensions form a porous layer, which can be modified during further processing of the extruded article, such as heating. If suspensions are used as the coating compound, a de-airing step may be desired prior to the extrusion step in order to avoid breakaway or the formation of holes in the coating due to air bubbles. Alternatively, the suspension could be mixed under negative pressure.

In a particularly preferred embodiment, the process of the present invention is used to produce cylindrical heat sources for heated smoking articles, such as heated cigarettes. Each heat source has at least one longitudinal air flow channel extending through it, the surface of which has a coating applied to it. During smoking, the coating in the air flow channels of the heat source may perform one or more functions including, but not limited to the decrease and stabilisation of the inner walls of the heat source during smoking, the prevention of the release of solid particulate matter into the mainstream smoke and the prevention of the release of carbon monoxide into the mainstream smoke.

The heat source is preferably combustible and may comprise any suitable combustible fuel including, but not limited to, carbon, aluminium, magnesium, carbides, nitrides and mixtures thereof. Preferred are combustible fuels with a high heat generating capacity, which provide very low amounts of incomplete combustion by-products and which provide for sufficient mechanical strength of the combustible heat source. The combustible heat sources may be carbon-based, that is they comprise primarily carbon. Preferably, the combustible heat source is a porous carbon-based heat source. The porosity of the combustible heat source has a substantial impact on its combustion rate. As the combustion proceeds, oxygen may diffuse into the mass of the heat source at a rate sufficient to sustain combustion.

The heat sources produced by the process of the present invention are cylindrical and preferably of substantially uniform diameter. The heat sources may, for example, be a cylinder of substantially circular cross section, or a cylinder of substantially elliptical cross section. The cross section of the heat source may be altered by altering the cross section of the orifice in the die, through which the heat source material is extruded.

If desired, organic binders may be incorporated in the heat source. Additives may also be included, for example, additives to promote consolidation of the combustible heat source (for example sintering aids), additives to promote combustion of the heat source (for example potassium) and additives to promote decomposition of one or more gases produced by combustion of the heat source (for example catalysts). Typically, the additives will be added to the feedstock prior to extrusion. However, oxidants may be added after any thermal treatments, to improve combustion and lighting properties of the heat source.

Advantageously, the coating in the longitudinal air flow channel of the heat source comprises a layer of solid particulate matter and is substantially air impermeable. The coating may be formed from one or more suitable materials that are substantially thermally stable and non-combustible at the combustion temperature of the heat source. Suitable materials are known in the art and include, for example, clays, such as kaolin, bentonite, muscovite mica, metal oxides, such as iron oxide, alumina, titania, silica, silica-alumina, zirconia and ceria, zeolites, zirconium phosphate, graphite, glasses, and other ceramic materials or combinations thereof. Preferred coating materials include mineral compounds such as clays and micaceous iron oxide. Preferably, the coating compound contains between about 5% and about 35% by volume of one or more minerals, more preferably between about 10% and about 25% by volume. Preferably, the particle size of the minerals in the coating compound is between about 50 nm and about 20 microns.

If desired, catalytic ingredients such as ingredients that promote the oxidation of carbon monoxide to carbon dioxide may be incorporated in the coating material. Suitable catalytic materials include, for example, platinum, palladium, transition metals and their oxides.

The coating compound may comprise one or more binders. Preferably, the coating compound comprises between about 0.5% and about 3% by weight of a binder, or a combination of binders. An example of a suitable binder is Methocel^{®} (methyl cellulose, available from Dow Chemical Company).

The coating compound may also comprise one or more dispersing agents, to prevent agglomeration of the particles in suspension. Preferably, the coating compound contains between about 0.1 % and about 10% by weight of a dispersing agent, or a combination of two or more dispersing agents, more preferably between about 0.1% and about 3%. An example of a suitable dispersing agent is Bentone^{®} LT (organically modified special smectic clay, available from Elementis Specialties, Inc.).

An antifoaming agent may also be added to the coating compound. An example of a suitable antifoaming agent is Agitan^{®} 731, (modified organo polysiloxanes with non-ionic alkoxylated compounds, available from Münzing Chemie).

Other suitable binders, dispersing agents and antifoaming agents, and their effects on the rheology of the suspension to which they are added, are well known by those skilled in the art.

Preferably, between one and three longitudinal air flow channels are formed in the heat source. If a heat source comprising more than one longitudinal air flow channel is extruded, the inner surface of one or more of the channels may be coated. Preferably, the inner surface of all of the longitudinal air flow channels is coated. The coating compound used to coat each longitudinal air flow channel may be the same as, or different to, the coating compound used to coat the other longitudinal air flow channels.

Preferably, the coating has a thickness of between about 10 microns and about 200 microns, more preferably of between about 10 microns and about 100 microns.

In preferred processes, a heat source having a single substantially central or axial airflow channel is formed. The diameter of the channel is preferably between about 1.5 mm and about 3 mm, more preferably between about 2 mm and about 2.5 mm.

Typically, the heat source requires drying after extrusion. The drying may be carried out at ambient temperature and pressure, followed by pyrolysis at about 750°C.

Preferably, the method further comprises the step of cutting the tube after the drying and pyrolysis step, to yield several heat sources of the desired length. The heat source preferably has a length of between about 7 mm and about 17 mm, more preferably of between about 11 mm and about 15 mm, most preferably of about 11 mm.

Preferably, the viscosity of the coating compound is between 8 mPa.s and 1700 mPa.s at 100s⁻¹ and 25°C, more preferably between 100 mPa.s and 800 mPa.s at 100s⁻¹ and 25°C. (1 Pa.s = 1 kgm⁻¹s⁻¹)

The invention will now be further described, by way of example only, with reference to the accompanying drawings, in which:
Figure 1 shows a longitudinal cross section through a portion of a die during use in a process according to a first example of the present invention for making a heat source for a heated smoking article; and
Figure 2 shows a longitudinal cross section through a portion of a die during use in a process according to a second example of the present invention for making a heat source for a heated smoking article.

### Example 1

A feedstock is first produced in the conventional manner by mixing powdered carbon with a potassium-containing burn additive and an organic binder system in water to form a carbonaceous dough.

A coating compound is also prepared from the materials shown below in Table 1.

**Table 1**

| **COMPOUND** | **FUNCTION** | **% BY WEIGHT** |
|---|---|---|
| MIOx (micaceous iron oxide) | Coating material | 33.00 |
| Demineralised water | Solvent | 62.00 |
| Methocel^{®} | Binder | 2.48 |
| Bentone^{®} LT | Dispersing agent | 0.62 |
| Agitan^{®} 731 | Antifoaming agent | 0.95 |
| Ethylene glycol | Plasticiser; dispersing agent | 0.95 |

To form the coating compound, an emulsion is first prepared from a mixture of demineralised water and Agitan^{®} 731 and then small portions of the Bentone^{®} LT are progressively dispersed in the emulsion. Ethylene glycol, then the micaceous iron oxide and finally the Methocel^{®} are added to the dispersion in small portions. The solid fraction in the final coating compound is approximately 10% by volume and the coating compound has a viscosity of approximately 0.65 Pa.s (at 100 s⁻¹ and 25°C).

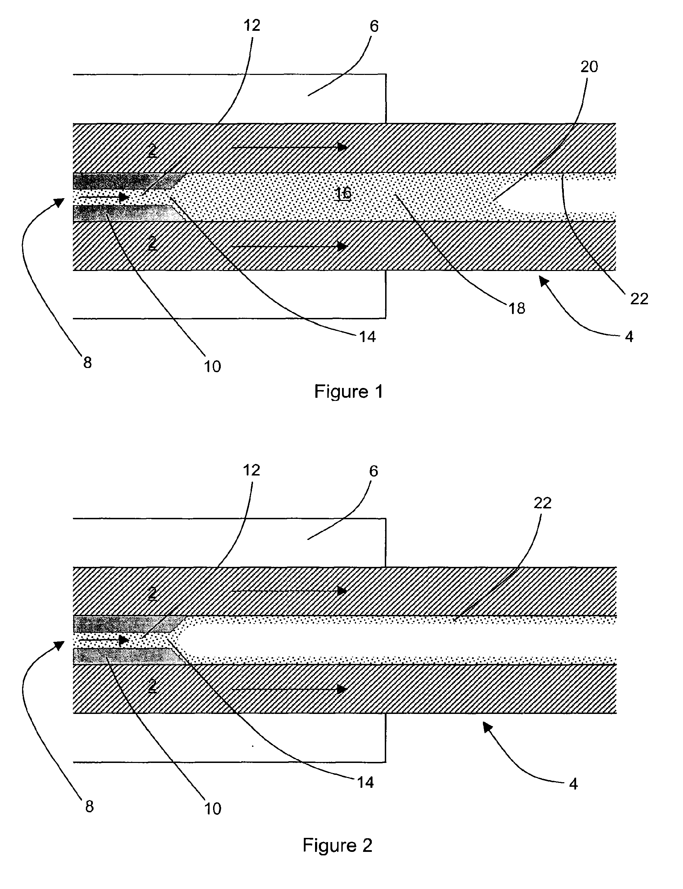

As shown in Figure 1, the carbonaceous dough 2 is extruded through a die 6 in the direction of the arrows, to form a rod 4. The speed of extrusion is approximately 12 mms⁻¹. The die 6 comprises a central die orifice 8 of circular cross section, in which there is mounted a mandrel 10. The mandrel 10 is mounted centrally in the die orifice 8 and also has a circular cross section, with an outer diameter of approximately 3 mm. The resultant extruded rod 4 is therefore cylindrical, with a circular cross section and a central longitudinal air flow channel. The longitudinal air flow channel has a circular cross section and a diameter of approximately 3 mm, corresponding to the cross section and diameter of the mandrel 10.

A feed passageway 12 extends through the centre of the mandrel 10, to an outlet 14 located in the centre of the end face of the mandrel 10. At the outlet, the mandrel walls are bevelled such that the diameter of the feed passageway at the outlet slightly increases. The coating compound 16 is introduced into the feed passageway 12 by means of a pumping system (not shown) and is fed through the passageway 12, then out of the outlet 14 into the longitudinal air flow channel in the extruded rod 4. In the initial stage of the extrusion process, the coating compound 16 is pumped through the mandrel 10 and into the feed passageway 12 such that a reservoir 18 of the coating compound 16 forms inside the longitudinal air flow channel of the rod 4 immediately adjacent to the end of the mandrel 10. Once the reservoir 18 has formed and the meniscus 20 of the reservoir is in the desired position relative to the end of the mandrel 10, the flow rate of the coating compound is controlled by the pumping system so that the coating compound 16 is fed to the reservoir 18 at the same rate as it leaves. The meniscus 20 of the reservoir is thereby retained in substantially the same position throughout the extrusion process.

As the carbonaceous dough is extruded through the die 6, the coating compound 16 in the reservoir 18 forms a coating layer 22 on the inner surface of the longitudinal channel, having a thickness of approximately 250 microns.

The rod 4 is then dried at ambient temperature and pyrolised at approximately 750°C under an inert atmosphere. The dried coating has a thickness of approximately 50 microns and a porosity of approximately 50%. Finally, the rod 4 is cut to yield several cylindrical heat sources for incorporation into heated cigarettes.

### Example 2

A feedstock and coating compound are prepared as described above. As shown in Figure 2, the carbonaceous dough 2 is extruded in the direction of the arrows through a die 6 having an identical construction to that shown in Figure 1 and described above. However, unlike in Example 1, there is no reservoir of the coating compound and instead, the flow of the coating compound 16 is controlled so that a coating layer 22 is formed on the inner surface of the longitudinal channel as soon the extruded cylinder 4 leaves the end of the mandrel 10. Unlike in Example 1, in which the volume of the coating compound supplied to the reservoir is controlled, in the process of Example 2, the pressure of the coating compound is controlled in order to achieve a stable process. The pressure should be kept stable to within few percent, to avoid disruption of the coating layer. The thickness of the coating layer 22 may be altered through variation of the pressure to change the flow rate of the coating compound 16.

## Claims

1. A process for the production of a cylindrical article (4) having a longitudinal channel extending therethrough, the inner surface of which is covered with a coating layer (22), wherein the process comprises the steps of:
(a) forming the cylindrical article (4) by extrusion through a die (6) comprising an orifice (8) with a mandrel (10) mounted therein to form the longitudinal channel; and
(b) applying a fluid coating compound (16) to the inner surface of the longitudinal channel downstream of the mandrel by feeding the coating compound (16) through a feed passageway (12) extending longitudinally through the mandrel (10) and having an outlet in the end thereof, wherein the coating compound wets the inner surface of the longitudinal channel as a result of forces of adhesion between the coating compound and the inner surface, thereby forming the coating layer (22) as the cylindrical article (4) is extruded.

2. A process according to claim 1 wherein the flow of the coating compound (16) through the feed passageway (12) in the mandrel (10) is controlled so as to form a reservoir (18) of the coating compound (16) in the portion of the longitudinal channel immediately adjacent the end of the mandrel (10).

3. A process according to claim 2 wherein the position of the reservoir (18) is measured and the flow rate of the coating compound (16) is controlled in order to maintain the reservoir (18) in substantially the same position relative to the end of the mandrel (10).

4. A process according to any preceding claim wherein the coating compound (16) is a suspension of particles and wherein the process further comprises the step of de-airing the suspension prior to step (c).

5. A process according to any preceding claim for producing a cylindrical article having a plurality of longitudinal channels, wherein the die used in step (a) comprises an orifice with a plurality of mandrels mounted therein, each mandrel forming one of the longitudinal channels.

6. A process according to claim 5 wherein the inner surfaces of two or more longitudinal channels are covered with a coating layer and wherein step (c) comprises feeding a fluid coating compound into the two or more longitudinal channels through feed passageways extending through the mandrels forming the two or more channels, wherein the coating compound wets the surfaces of the longitudinal channels thereby forming the coating layer on the inner surface of each longitudinal channel as the cylindrical article is extruded.

7. A process according to any preceding claim wherein a coating layer (22) having a thickness of between 10 microns and 100 microns is formed in step (c).

8. A process according to any preceding claim for the production of cylindrical heat sources (4) for heated smoking articles, each heat source having one or more longitudinal air flow channels extending therethrough.

9. A process according to claim 8 wherein the heat source is carbonaceous.

10. A process according to claim 8 or 9 wherein the coating compound is a suspension containing ceramic particles.
